# EUROPÄISCHE PATENTSCHRIFT

(11) **EP 1 317 150 B1**
(45) Veröffentlichungstag und Bekanntmachung des Hinweises auf die Patenterteilung: **21.10.2015**
(21) Anmeldenummer: 02102529.1
(22) Anmeldetag: 04.11.2002
(51) Int. Cl.: H04Q 3/00

(54) **Verfahren zum Übermitteln eines Kennzeichendatums einer Netzknoteneinheit, zugehörige Vorrichtung und zugehöriges Programm**
Method for transmitting an identification of a network node unit, associated apparatus and associated program
Procédé pour transmettre une identification d'une unité de noeud de réseau, dispositif associé et programme associé

(30) Priorität: 03.12.2001 DE 10159261
(43) Veröffentlichungstag der Anmeldung: 04.06.2003
(73) Patentinhaber: Unify GmbH & Co. KG, 81379 München (DE)
(72) Erfinder: Reichbauer, Hermann, 81377 München (DE)
(74) Vertreter: Fritzsche, Thomas

(56) Entgegenhaltungen:
- EP-A2- 0 556 515
- WO-A-99/29090

## Beschreibung

Die Erfindung betrifft ein Verfahren zum Übermitteln eines Kennzeichendatums, bei dem eine Übertragungsstrecke zwischen einer Bezugs-Netzknoteneinheit und einer Partner-Netzknoteneinheit eines Datenübertragungsnetzes liegt. Über die Übertragungsstrecke wird von der Bezugs-Netzknoteneinheit zu der Partner-Netzknoteneinheit mindestens eine Signalisierungsnachricht übertragen, die zur Verbindungssteuerung für die Übertragung von Nutzdaten zwischen zwei Endgeräten des Datenübertragungsnetzes dient. Die Nutzdaten lassen sich über dieselbe Übertragungsstrecke übertragen, über die die Signalisierungsnachricht übertragen wird oder über eine andere Übertragungsstrecke. Von der Partner-Netzknoteneinheit wird zu der Bezugs-Netzknoteneinheit eine Rück-Signalisierungsnachricht übertragen, die vorzugsweise ebenfalls zur Verbindungssteuerung für die Übertragung von Nutzdaten dient.

Das Datenübertragungsnetz überträgt digitale Daten oder analoge Daten. Die Datenübertragung erfolgt zumindest in oberen Protokollschichten verbindungsorientiert, d.h. es gibt eine Verbindungsaufbauphase, eine Nutzdatenübertragungsphase und eine Verbindungsabbauphase. Die Verbindung ist entweder tatsächlich physikalisch vorhanden oder nur über die Vergabe bestimmter Kennzeichen festgelegt. Bei der ausschließlichen Vergabe von Kennzeichen für eine Verbindung spricht man auch von einer logischen oder virtuellen Verbindung. Besteht eine logische Verbindung, so lassen sich die Nutzdaten insbesondere auf unteren Protokollschichten verbindungslos übertragen, d.h. ohne dass es in diesen Protokollschichten eine Verbindungsaufbauphase und eine Verbindungsabbauphase geben muss. Beispiele für Datenübertragungsnetze sind das durchschaltevermittelte Telefonnetz oder Datenpaketübertragungsnetze, z.B. das Internet.

Eine Netzknoteneinheit ist eine Einheit des Datenübertragungsnetzes, die Vermittlungsfunktionen erbringt. Beispielsweise sind an einer Netzknoteneinheit mehr als drei Übertragungsstrecken angeschlossen. Abhängig von den Signalisierungsdaten werden die auf einer Übertragungsstrecke ankommenden Nutzdaten zu einer durch die Signalisierungsdaten festgelegten anderen Übertragungsstrecke weitergeleitet. Beispiele für Netzknoteneinheiten in durchschaltevermittelten Datenübertragungsnetzen sind Vermittlungsstellen und Nebenstellenanlagen bzw. Telekommunikationsanlagen. In Datenpaketübertragungsnetzen sind die Netzknoteneinheiten beispielsweise sogenannte Router.

Zwischen Vermittlungsstellen wird als Signalisierungsprotokoll beispielsweise ein Protokoll gemäß ISUP (ISDN User Part) eingesetzt. Zwischen den Nebenstellenanlagen eines Nebenstellenanlagenverbundes wird als Signalisierungsprotokoll das Protokoll QSIG oder ein auf diesem Protokoll aufbauendes Protokoll eingesetzt, beispielsweise ein firmenspezifisches Protokoll wie das Protokoll Cornet NQ der Firma SIEMENS AG. Im Internet wird beispielsweise zwischen den Endgeräten das Signalisierungsprotokoll TCP (Transmission Control Protocol) eingesetzt.

Für durchschaltevermittelte Datenübertragungsnetze ist kein Verfahren zum automatischen Übermitteln von Kennzeichendaten bekannt, welche die Netzknoteneinheiten kennzeichnen. Im Internet gibt es im Wesentlichen zwei Verfahren zum Übermitteln von Kennzeichendaten, nämlich mit Hilfe sogenannter Broadcast-Update-Nachrichten oder mit Hilfe des sogenannten Flooding. Die Kennzeichnungsdaten werden beispielsweise für das sogenannte Routing eingesetzt.

Aus der WO99/29090 A1 ist ein Verfahren und System zur Netzwerkrufverfolgung (NCT-Network Call Trace) bekannt, bei welchem eine Initialadressennachricht (IAM-Initail Adress Message) von einem Netzknoten zu einem anderen in einer Übertragungskette von einem rufenden Endgerät zu einem gerufenen Endgerät übertragen wird, wobei die Initialadressennachricht eine Liste mit Kennzeichen aller bislang durchlaufenen Netzknoten enthält. Der letzte, mit dem gerufenen Endgerät verbundene Netzknoten fügt der Liste seine eigene Kennung hinzu, und daraufhin wird eine Rückübertragungsnachricht über alle durchlaufenen Netzknoten bis zum ersten, mit dem rufenden Endgerät verbundenen Netzknoten übertragen, wobei die Rückübertragungsnachricht die vollständige Adressenliste aufweist

Es ist Aufgabe der Erfindung, zum automatischen Übermitteln von Kennzeichnungsdaten ein einfaches Verfahren anzugeben. Außerdem sollen eine zugehörige Vorrichtung und ein zugehöriges Programm angegeben werden.

Die auf das Verfahren bezogene Aufgabe wird durch die im Patentanspruch 1 angegebenen Verfahrensschritte gelöst. Die auf die Vorrichtung bezogene Aufgabe wird durch die Merkmale des Patentanspruchs 17, die auf das Programm bezogene Aufgabe durch die Merkmale des Patentanspruchs 19 gelöst. Weiterbildungen sind in den Unteransprüchen angegeben.

Beim erfindungsgemäßen Verfahren wird zusätzlich zu den eingangs genannten Verfahrensschritten in die Signalisierungsnachricht automatisch ein Nachrichtenelement eingefügt, mit dem die Übertragung des Kennzeichendatums angefordert wird. Das Kennzeichendatum wird dann in der Rück-Signalisierungsnachricht von der Partner-Netzknoteneinheit zur Bezugs-Netzknoteneinheit übertragen. Das Kennzeichendatum ist ein Verbindungskennzeichen, mit dessen Hilfe eine weitere Anforderung an die Partner-Netzknoteneinheit gestellt wird. Und zwar wird mit Hilfe des Verbindungskennzeichens automatisch von der Partner-Netzknoteneinheit mindestens ein weiteres Kennzeichendatum zur Kennzeichnung der Partner-Netzknoteneinheit oder eines Bestandteils der Partner-Netzknoteneinheit angefordert. Das angeforderte weitere Kennzeichendatum wird dann von der Partner-Netzknoteneinheit zur Bezugs-Netzknoteneinheit übertragen.

Durch die enge Verknüpfung von Signalisierungsnachrichten und Anforderung bzw. Übermittlung des Kennzeichendatums wird gewährleistet, dass das iCennzeichendatum nur dann übermittelt wird, wenn die Übertragungsstrecke zum Übertragen der Signalisierungsnachrichten in beiden Übertragungsrichturigen ordnungsgemäß arbeitet. Außerdem wird das Kennzeichendatum mit Nachrichten angefordert, die ohnehin zu übertragen sind, nämlich zum Aufbau der Verbindung, die dann zur Übertragung der Nutzdaten dient. Damit bietet das erfindungsgemäße Verfahren eine sehr einfache Möglichkeit zum Übertragen von Kennzeichendaten. Außerdem ist die Übertragung des Kennzeichenda.tums eng mit der Übertragung von Nutzdaten verknüpft. Kennzeichendaten werden insbesondere nur von solchen Pärtner-Netzknoteneinheiten übermittelt, die auf ankommende Signalisierungsnachrichten für die Übertragung. von Nutzdaten reagieren. Ausfälle von Netzknoteneinheiten lassen sich so frühzeitig erfassen. Des Weiteren können ohnehin vorhandene Einheiten zum Senden bzw. Empfangen der Sigrialisierungsnachr,ichten und zum Erzeugen bzw. Bearbeiten dieser Signa.lisierungsnachrichten für die Übermittlung des Kennzeichendatums eingesetzt werden. Diese Einheiten müssen nur geringfügig modifiziert werden. Durch die Anforderung und Rückübertragung eines weiteren Kennzeichendatums wird erreicht, dass weitere Kennzeichendaten unabhängig von der Signalisierung für die Übertragung von Nutzdaten angefordert werden können. Auch lässt sich der Zeitpunkt für die Anforderung und für das Übertragen der weiteren Kennzeichendaten von der Signalisierung für die Übertragung der Nutzdaten trennen. Dies bietet eine Reihe von Vorteilen, die bei der Erläuterung von Weiterbildungen deutlich werden.

Bei einer Weiterbildung des erfindungsgemäßen Verfahrens dient das Kennzeichendatum bzw. das weitere Kennzeichendatum zum Erfassen der Topologie des Datenübertragungsnetzes. Alternativ oder zusätzlich lässt sich das Kennzeichendatum bzw. das weitere Kennzeichendatum für das sogenannte Routing verwenden, d.h. für das Festlegen von zu benutzenden Übertragungsstrecken abhängig von einem Zielkennzeichen. Bei einer Ausgestaltung wird das Kennzeichendatum bzw. das weitere Kennzeichendatum in der Bezugs-Netzknoteneinheit gespeichert. Durch diese Maßnahme ist eine lokale Auswertung bzw. das lokale Sammeln von Daten möglich.

Bei einer nächsten Ausgestaltung wird das erfindungsgemäße Verfahren in mehreren Netzknoteneinheiten ausgeführt. Dabei hat die betreffende Netzknoteneinheit jeweils die Rolle der Bezugs-Netzknoteneinheit. Werden dann alle in das erfindungsgemäße Verfahren einbezogenen Netzknoteneinheiten zur Übertragung der von ihnen lokal gesammelten Kennzeichendaten oder weiteren Kennzeichendaten aufgefordert, so lässt sich die Topologie des Datenübertragungsnetzes sehr einfach ermitteln.

Die Netztopologie beschreibt die räumliche Struktur des Datenübertragungsnetzes. Das bedeutet, dass die Netztopologie insbesondere angibt, welche Netzknoteneinheit mit welcher anderen Netzknoteneinheit direkt verbunden ist.

Bei einer Weiterbildung des erfindungsgemäßen Verfahrens ist das Datenübertragungsnetz ein durchschaltevermitteltes Datenübertragungsnetz, in dem abhängig von den Signalisierungsdaten Übertragungsstrecken und/oder Übertragungskanäle eines Zeitmultiplexverfahrens verschaltet werden, beispielsweise in einem Koppelnetz. Die Übertragungsstrecke ist bei einer Ausgestaltung vorzugsweise eine elektrisch leitende Leitung oder ein optischer Wellenleiter. Jedoch lassen sich auch Funkübertragungsstrecken als Übertragungsstrecke nutzen. Insbesondere für durchschaltevermittelte Datenübertragungsnetze gab es bisher kein automatisches Verfahren zum automatischen Übermitteln von Kennzeichnungsdaten, mit deren Hilfe dann die Topologie des durchschaltevermittelten Netzes erfasst wurde. Damit wird es durch die Weiterbildung erstmals möglich, die Topologie eines durchschaltevermittelten Datenübertragungsnetzes automatisch zu erfassen. Das bisher ausgeführte manuelle Erfassen der Topologie ist damit nicht mehr erforderlich.

Bei einer Ausgestaltung wird das erfindungsgemäße Verfahren in einem Nebenstellenanlagenverbund eingesetzt. Die Netzknoteneinheiten sind in diesem Falle Nebenstellenanlagen. Auch in einem Nebenstellenanlagenverbund gab es bisher kein Verfahren zum automatischen Erfassen der Netztopologie.

Bei einer nächsten Weiterbildung des erfindungsgemäßen Verfahrens ist die Signalisierungsnachricht eine Verbindungsaufbaunachricht, beispielsweise eine sogenannte Setup-Nachricht. Die Rück-Signalisierungsnachricht bestätigt den Verbindungsaufbau, beispielsweise durch eine sogenannte Connect-Nachricht. Die Signalisierungsnachrichten werden bei einer Ausgestaltung gemäß dem Protokoll ISUP (ISDN User Part) oder gemäß dem Protokoll QSIG vermittelt. Damit lassen sich vorgegebene Standards einhalten. Die zur Durchführung des erfindungsgemäßen Verfahrens auszuführenden Modifikationen werden im Rahmen der durch die Standards vorgegebenen Erweiterungsmöglichkeiten ausgeführt. Der Kern des Protokolls ISUP ist von der ITU-T (International Telecommunication Union - Telecommunication Sector) in den Standards Q.761 bis Q.765 festgelegt worden. Das Protokoll QSIG ist von der ECMA (European Computer Manufacturer Association) in seinem Kern in den Standards ECMA 143, 165, 173 und 174 festgelegt worden.

Bei einer nächsten Weiterbildung des erfindungsgemäßen Verfahrens wird das weitere Kennzeichendatum ohne Aufbau einer zusätzlichen Nutzdatenübertragungsverbindung angefordert und übermittelt, d.h. also insbesondere ohne Anforderung des Aufbaus einer Nutzdatenübertragungsverbindung. Das Aufbauen einer Nutzdatenübertragungsverbindung würde zusätzliche Ressourcen des Datenübertragungsnetzes binden. Da oft nur wenige Kennzeichendaten zu übertragen sind, ist die Übertragung in einer Signalisierungsnachricht ausreichend.

Bei einer anderen Weiterbildung kennzeichnet ein weiteres Kennzeichendatum den Anschluss der Übertragungsstrecke in der Partner-Netzknoteneinheit. Bei einer Ausgestaltung kennzeichnet ein weiteres Kennzeichendatum die Partner-Netzknoteneinheit. Insbesondere findet die Kennzeichnung in beiden Fällen auf einer sogenannten Netzwartungs- und Netzverwaltungsebene des Datenübertragungsnetzes statt.

Bei einer anderen Weiterbildung wird eine Erfassungszeitdauer vorgegeben, in der das Verfahren für die während der Erfassungszeitdauer auftretenden Signalisierungsnachrichten für mehrere Übertragungsstrecken der Bezugs-Netzknoteneinheit und/oder mehrmals pro Übertragungsstrecke ausgeführt wird. Durch das mehrmalige Ausführen des Verfahrens für eine Übertragungsstrecke lässt sich erreichen, dass mehrere direkt über diese Übertragungsstrecke erreichbare Netzknoteneinheiten erfasst werden können. Diese Netzknoteneinheiten sind beispielsweise über eine Multiplexeinheit oder über ein sogenanntes virtuelles privates Datenübertragungsnetz erreichbar.

Bei einer Ausgestaltung werden die für die Erfassungszeitdauer empfangenen Verbindungskennzeichen vorzugsweise mit ihrer Zuordnung zu den Übertragungsstrecken, über die sie empfangen worden sind, gespeichert. Erst nach Ablauf der Erfassungszeitdauer werden die weiteren Kennzeichnungsdaten mit Hilfe der gespeicherten Kennzeichnungsdaten angefordert. Durch dieses zweistufige Verfahren lässt sich u.a. die durch die Durchführung des Verfahrens entstehende Belastung des Datenübertragungsnetzes gleichmäßiger verteilen.

Bei einer Ausgestaltung wird Verfahren periodisch oder aperiodisch wiederholt. Beispielsweise lässt sich das Verfahren alle fünf Minuten oder alle zehn Minuten ausführen. Änderungen der Topologie lassen sich so innerhalb des festgelegten Zeitraumes erfassen.

Bei einer Weiterbildung des erfindungsgemäßen Verfahrens wird vor Beginn der Erfassungszeitdauer ein Vermerk in einem der Übertragungsstrecke zugeordneten Datensatz gespeichert. Abhängig vom Vermerk wird das Nachrichtenelement in die Signalisierungsnachrichten eingefügt. Beim Fehlen des Vermerks wird das Nachrichtenelement dagegen nicht in die Signalisierungsnachricht eingefügt. Der Vermerk wird erst am Ende der Empfangszeitdauer gelöscht. Das Verwenden eines Vermerks ist eine einfache Möglichkeit, um einerseits Übertragungsstrecken zu kennzeichnen, für die das erfindungsgemäße Verfahren ausgeführt werden soll, und um andererseits den Lauf der Erfassungszeitdauer auch an andere Einheiten zu signalisieren.

Bei einer nächsten Weiterbildung wird in der Partner-Netzknoteneinheit ein Vermerk in einem der Übertragungsstrecke zugeordneten Datensatz gespeichert, sobald das Nachrichtenelement empfangen wird. Abhängig von dem Vermerk wird das Kennzeichendatum in eine Rück-Signalisierungsnachricht eingefügt. Beim Fehlen des Vermerks werden dagegen keine Kennzeichnungsdaten in Rück-Signalisierungsnachrichten eingefügt. Der Vermerk wird beim Übertragen einer Rück-Signalisierungsnachricht gelöscht, welche ein Kennzeichendatum enthält. Durch diese Maßnahme lässt sich gewährleisten, dass insbesondere bei einer längeren Erfassungszeitdauer je Partner-Netzknoteneinheit weniger Rück-Signalisierungsnachrichten übertragen werden, die ein Kennzeichendatum enthalten. Die längere Erfassungszeitdauer ist beispielsweise erforderlich, um Netzknoteneinheiten zu erfassen, die nur über eine Multiplexeinheit oder über ein weiteres Datenübertragungsnetz erreichbar sind. Durch größer gewählte Erfassungszeitdauern erhöht sich die Wahrscheinlichkeit, dass während der Erfassungszeitdauer auch zu diesen Netzknoteneinheiten eine Nutzdatenübertragungsverbindung aufgebaut wird und dass mit der dafür erforderlichen Signalisierung ein Kennzeichendatum angefordert werden kann.

Bei einer nächsten Weiterbildung wird für mindestens eine an der Bezugs-Netzknoteneinheit angeschlossene Übertragungsstrecke vermerkt, dass das erfindungsgemäße Verfahren oder eine seiner Weiterbildungen ausgeführt werden sollen. Für mindestens eine andere an der Bezugs-Netzknoteneinheit angeschlossene Übertragungsstrecke wird dagegen vermerkt, dass das Kennzeichendatum manuell vorgegeben wird. Für eine dritte Übertragungsstrecke wird vermerkt, dass ein Wechsel von einer manuellen Vorgabe zu einer automatischen Erfassung von Kennzeichendaten zulässig ist. Durch diese Weiterbildung lassen sich Vorgaben insbesondere für eine Übergangszeit treffen, in der erfindungsgemäße Verfahren oder eine seiner Weiterbildung erst eingeführt werden.

Bei einer Weiterbildung liegt zwischen der Bezugs-Netzknoteneinheit und der Partner-Netzknoteneinheit keine weitere Netzknoteneinheit, in welcher zumindest die auf die Partner-Netzknoteneinheit bezogenen Verfahrensschritte ausgeführt werden. Eine Bezugs-Netzknoteneinheit ermittelt damit nur Kennzeichendaten von Nachbar-Netzknoteneinheiten, wobei die Nachbarschaft darauf bezogen ist, dass keine weitere Netzknoteneinheit dazwischenliegt, in der die auf eine Partner-Netzknoteneinheit bezogenen Verfahrensschritte ausgeführt werden.

Bei einer nächsten Weiterbildung liegt zwischen der Bezugs-Netzknoteneinheit und der Partner-Netzknoteneinheit eine Multiplexeinheit. Eine Multiplexeinheit soll nur eine Multiplexfunktion erfüllen und enthält somit nicht die zur Durchführung des erfindungsgemäßen Verfahrens bzw. einer seiner Weiterbildungen erforderlichen Einheiten. Auch sind in der Multiplexeinheit keine Einheiten vorhanden, welche die auf die Partner-Netzknoteneinheit bezogenen Verfahrensschritte ausführen könnten.

Bei einer anderen Weiterbildung führt die Übertragungsstrecke zu einem weiteren Datenübertragungsnetz, für das ein anderes Signalisierungsverfahren für die Verbindungssteuerung festgelegt worden ist als für das Datenübertragungsnetz, in dem sich die Bezugs-Telekommunikationsanlage befindet. Das Datenübertragungsnetz erbringt bei einer Ausgestaltung die Funktionen eines virtuellen Privatnetzes. In solchen virtuellen Privatnetzen erbringen öffentliche Vermittlungsstellen die Funktionen einer Telekommunikationsanlage oder eines Telekommunikationsanlagenverbundes. Außerdem haben die virtuellen Privatnetze die Eigenschaft, die am virtuellen Privatnetz ankommenden Signalisierungsnachrichten in Datenstruktur und Dateninhalt unverändert, d.h. transparent, zu übertragen, auch dann wenn die ankommenden Signalisierungsnachrichten im virtuellen Privatnetz bearbeitet und ausgewertet werden. Alternativ ist das weiter Datenübertragungsnetz ein sogenanntes Backbone-Netz mit Festverbindungen oder wählbarer Verbindung. Auch in dem Backbone-Netz werden die ankommenden Signalisierungsnachrichten transparent übertragen.

Die Erfindung betrifft außerdem eine Vorrichtung, mit der das erfindungsgemäße Verfahren oder eine seiner Weiterbildungen ausgeführt werden können. Außerdem betrifft die Erfindung ein Programm, das eine Befehlsfolge enthält, bei deren Ausführung durch einen Prozessor das erfindungsgemäße Verfahren oder eine seiner Weiterbildungen ausgeführt wird. Damit gelten für die Vorrichtung und für das Programm die oben genannten technischen Wirkungen ebenfalls.

Im Folgenden werden Ausführungsbeispiele der Erfindung an Hand der beiliegenden Zeichnungen erläutert. Darin zeigen:
- Figur 1: einen Telekommunikationsanlagenverbund mit einer Bezugs-Telekommunikationsanlage,
- Figur 2: Verfahrensschritte zum Ermitteln der Telekommunikationsanlagennummer einer der Bezugs-Telekommunikationsanlage benachbarten Telekommunikationsanlage,
- Figur 3: eine Partnertabelle zum Speichern der ermittelten Telekommunikationsanlagennummer,
- Figuren 4A bis 4C: für den Telekommunikationsanlagenverbund ausgehend von mehreren Partnertabellen ermittelte Netztopologien vor einer Störung, während einer Störung und nach der Ausführung einer Übergangsmaßnahme bis zur Beseitigung der Störung, und
- Figur 5: den Aufbau der Bezugs-Telekommunikationsanlage.

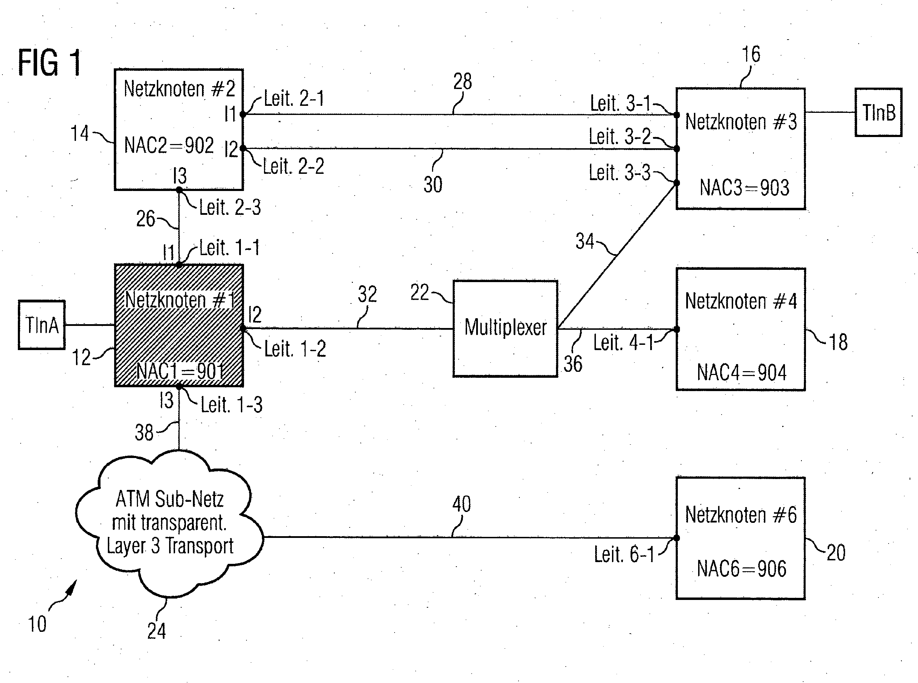

Figur 1 zeigt einen Telekommunikationsanlagenverbund 10, der eine Bezugs-Telekommunikationsanlage 12, vier Telekommunikationsanlagen 14 bis 20, eine Multiplexeinheit 22 sowie einen transparenten Übertragungsabschnitt 24 enthält.

Die Telekommunikationsanlagen 12 und 14 sind durch eine Leitung 26 verbunden. Die Telekommunikationsanlagen 14 und 16 sind durch zwei Leitungen 28 und 30 miteinander verbunden, die zwei voneinander unabhängige Übertragungsstrecken bilden. Von der Telekommunikationsanlage 12 zur Multiplexeinheit 22 verläuft eine Leitung 32. Von der Multiplexeinheit 22 geht eine Leitung 34 zur Telekommunikationsanlage 16 und eine Leitung 36 zur Telekommunikationsanlage 18. Außerdem liegt eine Leitung 38 zwischen der Telekommunikationsanlage 12 und dem transparenten Übertragungsabschnitt 24. Eine Leitung 40 führt vom transparenten Übertragungsabschnitt 24 zur Telekommunikationsanlage 20.

Die Telekommunikationsanlagen 12 bis 20 dienen zur Vermittlung innerhalb des Privatnetzes des Betreibers der Telekommunikationsanlagen 12 bis 20, beispielsweise einer größeren Firma. Die Multiplexeinheit 22 ordnet nach einem fest vorgegebenen Verfahren oder nach einem einstellbaren Verfahren Übertragungskanäle auf der Leitung 32 zu Übertragungskanälen auf der Leitung 34 bzw. 36 zu. Andererseits ordnet die Multiplexeinheit in umgekehrter Übertragungsrichtung 22 auch Übertragungskanäle auf den Leitungen 34 bzw. 36 zu Übertragungskanälen auf der Leitung 32 zu.

Der transparente Übertragungsabschnitt 24 ist im Ausführungsbeispiel ein Datenübertragungsnetz, in dem die Daten gemäß ATM (Asynchronous Transfer Mode) übertragen werden. Bei einem anderen Ausführungsbeispiel ist der transparente Übertragungsabschnitt 24 ein Datenübertragungsnetz, das Funktionen eines virtuellen privaten Datenübertragungsnetzes erbringt. In dem virtuellen privaten Datenübertragungsnetz werden Funktionen einer Telekommunikationsanlage bzw. eines Telekommunikationsanlagenverbundes durch eine bzw. mehrere öffentliche Vermittlungsstellen erbracht, z.B. Vermittlungsstellen vom Typ EWSD (elektronisch gesteuertes digitales Wählsystem) der Firma SIEMENS AG.

Den Telekommunikationsanlagen 12 bis 20 wurden in dieser Reihenfolge Rufkennzeichen NAC1 bis NAC6 mit den Werten 901, 902, 903, 904 bzw. 906 zugeordnet. Mit Hilfe der Rufkennzeichen NAC1 bis NAC6 lassen sich die Telekommunikationsanlagen 12 bis 20 direkt anwählen.

Auf der Ebene der Verwaltung und der Wartung des Telekommunikationsanlagenverbundes 10 wurden für die Telekommunikationsanlagen 12 bis 20 in dieser Reihenfolge Netzknotennummern #1, #2, #3, #4 bzw. #6 festgelegt. Die genannten Netzknotennummern sind stark vereinfacht. Tatsächlich werden bspw. Netzknotennummern verwendet, die mehrere Teile haben, um auch Hierarchien im Telekommunikationsanlagenverbund 10 berücksichtigen zu können, z.B. die Netzknotennummer 1-1-250, wobei die erste Zahl eine sogenannte Domäne und die zweite Zahl eine sogenannte Sub-Domäne bezeichnen. Die dritte Zahl bezeichnet dann die jeweilige Telekommunikationsanlage.

Außerdem wurden auf der Netzverwaltungsebene Leitungsanschlussnummern 1-1 bis 6-1 festgelegt, um die Anschlüsse der Leitungen 26 bis 40 in den einzelnen Telekommunikationsanlagen 12 bis 20 zu bezeichnen. Auch diese Angaben sind vereinfacht, da tatsächlich Leitungsanschlussnummern verwendet werden, die bspw. vier Bestandteile haben, z.B. die Leitungsnummer 1-1-19-1, wobei der erste Teil einen Schaltschrank, der zweite Teil einen Rahmen in dem Schaltschrank, der dritte Teil einen Einschub in dem Rahmen und der vierte Teil einen Schaltungssatz aus dem Einschub bezeichnen. Im Ausführungsbeispiel haben die Leitungen 26, 32 und 38 in dieser Reihenfolge in der Bezugs-Telekommunikationsanlage 12 Leitungsanschlussnummern 1-1, 1-2 und 1-3. Die Leitungen 28, 30 und 26 haben in der Telekommunikationsanlage 14 in dieser Reihenfolge Leitungsanschlussnummern 2-1, 2-2 und 2-3. Die Leitungen 28, 30, 34 haben in dieser Reihenfolge in der Telekommunikationsanlage 16 Leitungsanschlussnummern 3-1, 3-2 und 3-3. Die Leitung 36 hat in der Telekommunikationsanlage 18 eine Leitungsanschlussnummer 4-1. Die Leitung 40 hat in der Telekommunikationsanlage 20 die Leitungsanschlussnummer 6-1.

Wie oben bereits angedeutet, sind die Leitungsanschlussnummern 1-1 bis 6-1 im Ausführungsbeispiel stark vereinfacht. Insbesondere stimmen die ersten Teile der Leitungsanschlussnummern in der Regel nicht mit den Netzknotennummern #1 bis #6 überein.

Außerdem gibt es in jeder Telekommunikationsanlage 12 bis 20 noch interne Leitungsnummern I1 bis I3 zur internen Bezeichnung der angeschlossenen Leitungen bzw. der Anschlüsse selbst. Beispielsweise sind die Leitungen 26, 32 und 38 in der Telekommunikationsanlage 12 mit den internen Leitungskennzeichnung I1, I2 bzw. I3 bezeichnet. In der Telekommunikationsanlage 14 sind die Leitungen 28, 30, 26 in dieser Reihenfolge mit internen Leitungskennzeichen I1, I2 bzw. I3 bezeichnet.

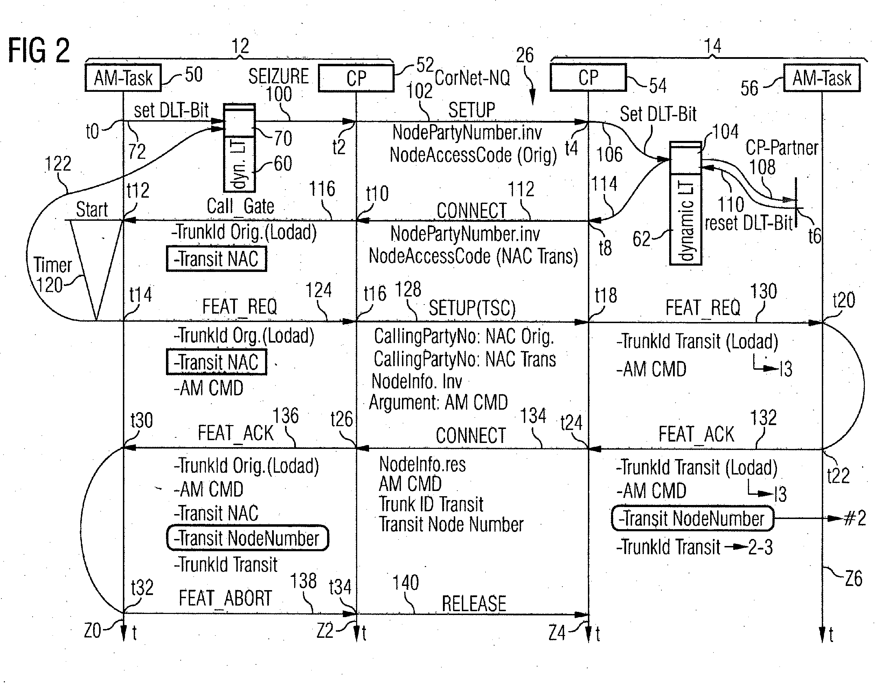

Figur 2 zeigt Verfahrensschritte zum Ermitteln der Netzknotennummer, die für die Telekommunikationsanlage 14 vergeben worden ist, ausgehend von der Bezugs-Telekommunikationsanlage 12. In Figur 2 sind eine in der Telekommunikationsanlage 12 enthaltene Wartungseinheit 50 und eine Verbindungssteuerungseinheit 52 dargestellt. Die Telekommunikationsanlage 14 enthält eine Verbindungssteuerungseinheit 54 und eine Wartungseinheit 56. Vier Zeitstrahlen Z0 bis Z6 beziehen sich in dieser Reihenfolge auf Vorgänge in der Wartungseinheit 50, der Verbindungssteuerungseinheit 52, der Verbindungssteuerungseinheit 54 und der Wartungseinheit 56. Auf den Zeitstrahlen Z0 bis Z6 liegen spätere Zeitpunkte weiter unten als frühere Zeitpunkte.

Bei den an Hand der Figur 2 erläuterten Verfahrensschritten wird auf einen in der Telekommunikationsanlage 12 gespeicherten dynamischen Leitungsdatensatz 60 sowie auf einen in der Telekommunikationsanlage 14 gespeicherten dynamischen Leitungsdatensatz 62 zugegriffen. Die dynamischen Leitungsdatensätze 60 bzw. 62 enthalten Daten, die sich auf die Leitung 26 beziehen. Diese Daten sind nur für kurze Zeiträume und gegebenenfalls nur für einzelne über die Leitung 26 aufgebauten Verbindungen gültig. Im Gegensatz dazu gibt es noch statische Leitungsdatensätze, die dauerhaft für die Leitung 26 gültig sind. Beispielsweise ist in einem für die Leitung 26 in der Telekommunikationsanlage 12 gespeicherten statischen Leitungsdatensatz, der in Figur 2 nicht dargestellt ist, vermerkt, dass die Leitung 26 in das an Hand der Figur 2 erläuterte Verfahren einbezogen werden soll.

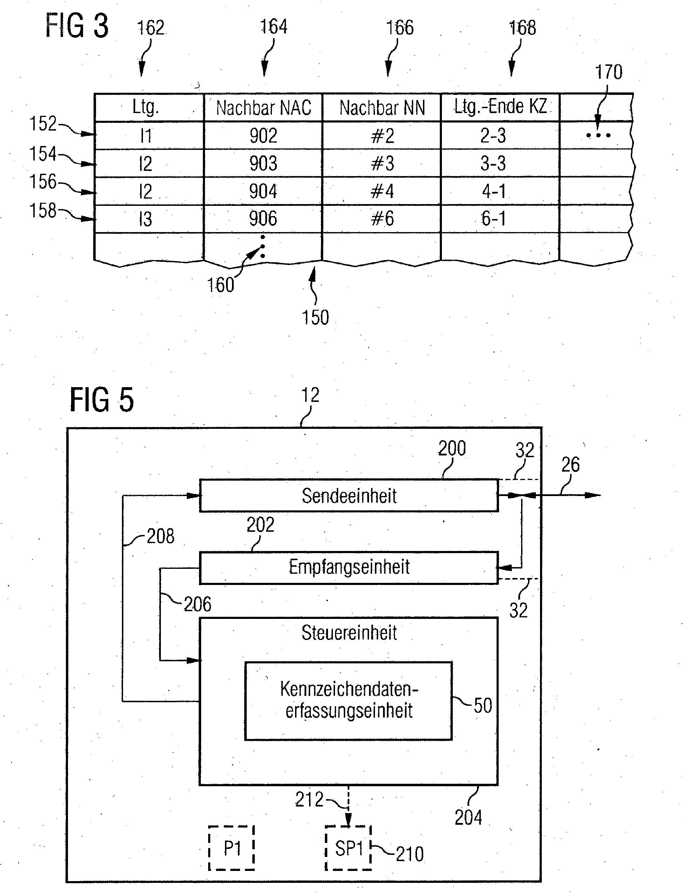

Aufgrund des Vermerks in dem statischen Leitungsdatensatz und des Fehlens eines Eintrages für die Leitung 26 in einer Partnertabelle 150, siehe Figur 3, setzt die Wartungseinheit 50 zu einem Zeitpunkt t0 eine Bitstelle 70 im Leitungsdatensatz 60 vom Wert NULL auf den Wert EINS, siehe Pfeil 72. Tritt eine Belegung (SEIZURE) der Leitung 26 auf, so ermittelt die Verbindungssteuerungseinheit 52 abhängig von der Zielrufnummer, bspw. abhängig von der Rufnummer eines Teilnehmers TlnB, in einem Routingverfahren die Leitung 26 als die für den Verbindungsaufbau zu nutzende Leitung. Die Verbindungssteuerungseinheit 52 prüft den Wert der Bitstelle 70 des dynamischen Leidungsdatensatzes für die ermittelte Leitung 26, siehe Pfeil 100. Hat die Bitstelle den Wert EINS, so wird in eine zu einem Zeitpunkt t2 erzeugte Verbindungsaufbaunachricht 102 ein Informationselement NodePartyNumber.inv eingefügt, in welchem das Rufkennzeichen NAC1 der Telekommunikationsanlage 12 zur Telekommunikationsanlage 14 übermittelt wird. Die Verbindungsaufbaunachricht 102 dient zum Aufbau einer Gesprächsverbindung zwischen einem an die Telekommunikationsanlage 12 angeschlossenen Endgerät eines Teilnehmers TlnA zu dem an die Telekommunikationsanlage 16 angeschlossenen Endgerät eines Teilnehmers TlnB, siehe auch Figur 1. Im übrigen erfüllt die Verbindungsaufbaunachricht 102 die im Standard QSIG für SETUP-Nachrichten festgelegten Vorgaben. Beispielsweise enthält die Verbindungsaufbaunachricht 102 auch als Zielrufnummer die Rufnummer des Teilnehmers TlnB.

Die Verbindungsaufbaunachricht 102 wird über die Leitung 26 zur Telekommunikationsanlage 14 übertragen und dort durch die Verbindungssteuerungseinheit 54 bearbeitet. Aufgrund des in der Verbindungsaufbaunachricht 102 enthaltenen Informationselementes NodePartyNumber.inv setzt die Verbindungssteuereinheit 54 zu einem Zeitpunkt t4 in dem Leitungsdatensatz 62, eine Bitstelle 104 vom Wert NULL auf den Wert EINS, siehe auch Pfeil 106. Der Leitungsdatensatz 62d ist der Leitung 26 zugeordnet, d.h. der Leitung, über die die Verbindungsaufbaunachricht 102 in der Telekommunikationsanlage 14 empfangen worden ist. Im übrigen bearbeitet die Verbindungssteuerungseinheit 54 die Verbindungsaufbaunachricht 102 gemäß Protokoll QSIG, so dass eine weitere Verbindungsaufbaunachricht 108 an die Telekommunikationsanlage 16 gesendet wird. Die weitere Verbindungsaufbaunachricht 108 enthält kein Informationselement NodePartyNumber.inv.

Zu einem Zeitpunkt t6 kommt von der Telekommunikationsanlage 16 eine Verbindungsnachricht 110, die bestätigt, dass der Teilnehmer TlnB den Hörer seines Telefons abgehoben hat. Die Verbindungsnachricht 110 ist eine CONNECT-Nachricht gemäß dem Protokoll QSIG und enthält keine über die Protokollvorgaben hinausgehende Informationselemente. Die ankommende Verbindungsnachricht 110 wird von der Verbindungssteuerungseinheit 54 bearbeitet. Da die Leitung 26 betroffen ist, wird der Wert der Bitstelle 104 geprüft. Aufgrund des Wertes EINS in dieser Bitstelle wird in eine gemäß Protokoll QSIG an die Telekommunikationsanlage 12 zu sendende Verbindungsnachricht 112 ebenfalls ein Informationselement NodePartyNumber.inv eingefügt, in dem das Rufkennzeichen NAC2 = 902 der Telekommunikationsanlage 14 angegeben ist, siehe auch Pfeil 114. Außerdem setzt die Rufsteuerungseinheit 54 nach der Übertragung des Rufkennzeichens NAC2 den Wert der Bitstelle 104 auf den Wert NULL. Im übrigen ist die Verbindungsnachricht 112 so wie im Standard QSIG für eine CONNECT-Nachricht vorgeschrieben aufgebaut.

Die Verbindungsnachricht 112 wird über die Leitung 26 zur Telekommunikationsanlage 12 übertragen und dort durch die Rufsteuerungseinheit 52 ausgewertet. Aufgrund des in der Verbindungsnachricht 112 enthaltenen Informationselementes NodePartyNumber.inv erzeugt die Rufsteuerungseinheit 52 zu einem Zeitpunkt t10 eine interne Signalisierungsnachricht 116, die auch als Call_Gate-Nachricht bezeichnet wird. Im übrigen wird die Verbindungsnachricht 112 durch die Rufsteuerungseinheit 52 gemäß Protokoll QSIG bearbeitet, unter anderem veranlasst die Rufsteuereinheit 52 die Freischaltung von Übertragungskanälen, über die anschließend die Gesprächsdaten zwischen dem Teilnehmer TlnA und dem Teilnehmer TlnB übertragen werden.
die Signalisierungsnachricht 116 ist an die Wartungseinheit 50 gerichtet und enthält als Parameter:
- das interne Leitungskennzeichen I1 der Leitung 26,
- das mit der Verbindungsnachricht 112 übermittelte Rufkennzeichen NAC2 der Telekommunikationsanlage 14.

Aufgrund des Empfangs der Signalisierungsnachricht 116 wird zu einem Zeitpunkt t12 von der Wartungseinheit 50 eine Zeitsteuerungseinheit 120 gestartet, die nach einer vorgebbaren Zeit abläuft, beispielsweise nach 10 Sekunden. Treten vor Ablauf der für die Zeitsteuerungseinheit 120 festgelegten Zeit weitere Belegungen auf der Leitung 26 auf, so wird in die zugehörigen Verbindungsaufbaunachrichten aufgrund des Wertes EINS der Bitstelle 70 von der Verbindungssteuereinheit 52 jeweils das Informationselement NodePartyNumber.inv eingefügt. Im Ausführungsbeispiel ist über die Leitung 26 jedoch nur die Telekommunikationsanlage 14 erreichbar, von der aufgrund des innerhalb des Zeitintervalls immer wieder erneut gesetzten Wertes der Bitstelle 104 weitere Rufkennzeichen NAC2 übertragen werden. Da es jedoch schon einen Eintrag in der Partnertabelle 150 gibt, werden keine weiteren Einträge erzeugt. Bei der Durchführung des an Hand der Figur 2 erläuterten Verfahrens für die Leitung 32 wird innerhalb des Zeitintervalls bei jeder in der Telekommunikationsanlage 16 empfangenen Verbindungsaufbaunachricht die der Bitstelle 104 entsprechende Bitstelle in der Telekommunikationsanlage 16 gesetzt und beim Senden einer Verbindungsnachricht zurückgesetzt. In der anderen über die Leitung 32 erreichbaren Telekommunikationsanlage 18 werden dieselben Vorgänge wie in der Telekommunikationsanlage 16 ausgeführt, so dass auch von der Telekommunikationsanlage 18 Verbindungsnachrichten eintreffen können, welche das Rufkennzeichen NAC4 der Telekommunikationsanlage 18 enthalten, siehe auch die Erläuterungen unten zu Figur 3.

Nach Ablauf der für die Zeitsteuerungseinheit 120 vorgegebenen Zeit wird von der Wartungseinheit 50 die Bitstelle 70 auf den Wert NULL gesetzt, siehe Pfeil 122. Der Beginn der festgelegten Zeitdauer für die Zeitsteuerungseinheit 120 wird nur durch die erste nach dem Setzen des Vermerks in der Bitstelle 70 eintreffenden Signalisierungsnachricht 116 festgelegt. Werden vor dem Ablauf der festgelegten Zeit weitere Signalisierungsnachrichten 116 empfangen, so hat dies keinen Einfluss auf die Länge der Zeitdauer. Die während der festgelegten Zeit eintreffenden Signalisierungsnachrichten 116 werden von der Wartungseinheit 50 bearbeitet. Dabei werden die Rufkennzeichen NAC in einer unten an Hand der Figur 3 näher erläuterten Partnertabelle 150 gespeichert.

Nach dem Ablauf der für die Zeitsteuerungseinheit 120 festgelegten Zeit werden u.a. die Einträge in der Partnertabelle 150 ermittelt, die sich auf die Leitung 26 beziehen, d.h. auf das interne Leitungskennzeichen I1. Es wird eine Anforderungsnachricht 124 durch die Wartungseinheit 50 erzeugt, die folgende Parameter enthält:
- das interne Leitungskennzeichen I1,
- das Rufkennzeichen NAC2, und
- ein Kommando AM CMD, mit dem weitere Kennzeichendaten angefordert werden.

Die Anforderungsnachricht 124 wird an die Verbindungssteuerungseinheit 52 gerichtet. Beim Bearbeiten der Anforderungsnachricht 124 erzeugt die Verbindungssteuerungseinheit 52 zu einem Zeitpunkt t16 eine Pseudo-Verbindungsaufbaunachricht 128, welche zwar wie eine protokollgemäße Verbindungsaufbaunachricht gemäß dem Protokoll QSIG aufgebaut ist, jedoch nicht zum Aufbau einer Datenübertragungsverbindung zwischen Teilnehmern dient. Die Pseudo-Verbindungsaufbaunachricht 128 enthält unter anderem die folgenden Parameter:
- Ursprungsrufnummer: NAC1,
- Zielrufnummer: NAC2,
- ein Informationsfeld NodeInfo.inv in dem das Kommando AM CMD enthalten ist.

Die Verbindungssteuerungseinheit 52 braucht aufgrund des in der Anforderungsnachricht 124 enthaltenen internen Leitungskennzeichens I1 kein Routing durchzuführen, da die zur Weiterleitung zu verwendende Leitung 26 direkt über das interne Leitungskennzeichen I1 ermittelt werden kann.

Die Pseudo-Verbindungsaufbaunachricht 128 wird über die Leitung 26 zur Telekommunikationsanlage 14 übertragen und dort von der Verbindungssteuerungseinheit 54 bearbeitet. Die Verbindungssteuerungseinheit 54 ermittelt zu der Leitung 26, auf der die Pseudo-Verbindungsaufbaunachricht 128 ankommt, das interne Leitungskennzeichen I3. Aufgrund der in der Pseudo-Verbindungsaufbaunachricht 128 enthaltenen Parameter veranlasst die Verbindungssteuerungseinheit 54 das Erzeugen einer Anforderungsnachricht 130 an die Wartungseinheit 56. Die Anforderungsnachricht 130 wird auch als FEAT_REQ-Nachricht bezeichnet und enthält die folgenden Parameter:
- das interne Leitungskennzeichen I3, und
- das Kommando AM CMD.

Die Wartungseinheit 56 empfängt die Anforderungsnachricht 130 zu einem Zeitpunkt t20 und erzeugt eine Antwortnachricht 132, die zu einem Zeitpunkt t22 an die Verbindungssteuerungseinheit 54 gesendet wird. Die Antwortnachricht 132 wird auch als FEAT_ACK-Nachricht bezeichnet. Bei der Bearbeitung der Anforderungsnachricht 130 werden von der Wartungseinheit 56 die folgenden Parameter ermittelt:
- die Netzknotennummer #2, der Telekommunikationsanlage 14, in der sich die Wartungseinheit 56 befindet, und
- die zum internen Kennzeichen I3 gehörende Leitungsanschlussnummer 2-3 der Leitung 26 in der Telekommunikationsanlage 14.

Die Antwortnachricht 132 enthält die folgenden Parameter:
- das interne Leitungskennzeichen I3,
- das Kommando AM CMD,
- die Netzknotennummer #2, und
- die Leitungsanschlussnummer 2-3.

Zu einem Zeitpunkt t24 erzeugt die Verbindungssteuerungseinheit 54 aufgrund der Antwortnachricht 132 eine Pseudo-Verbindungsnachricht 134, die die im Standard QSIG enthaltenen Vorgaben für eine Verbindungsnachricht CONNECT erfüllt, aber nicht im Zusammenhang mit der Übertragung von Nutzdaten steht. Zusätzlich zu den im Standard vorgeschriebenen Datenfeldern enthält die Pseudo-Verbindungsnachricht 134 ein Informationselement NodeInfo.res, in welchem bis auf das interne Leitungskennzeichen I1 die in der Antwortnachricht 132 enthaltenen Daten ebenfalls enthalten sind. Zusätzlich enthält die Pseudo-Verbindungsnachricht 134 das Rufkennzeichen der Telekommunikationsanlage 14. Die Pseudo-Verbindungsnachricht 134 wird über die Leitung 26 zur Telekommunikationsanlage 12 übertragen und dort von der Verbindungssteuerungseinheit 52 bearbeitet. Zu einem Zeitpunkt t26 erzeugt die Verbindungssteuerungseinheit 52 aufgrund der Pseudo-Verbindungsaufbaunachricht 134 eine Antwortnachricht 136.

Die Antwortnachricht 136 enthält das interne Leitungskennzeichen I1 der Leitung 26 sowie das Rufkennzeichen NAC2 der Telekommunikationsanlage 14. In der Antwortnachricht 136 sind auch die Daten des Informationselementes NodeInfo.res der Pseudo-Verbindungsnachricht 134 enthalten. Die Antwortnachricht 136 wird zu einem Zeitpunkt t30 von der Wartungseinheit 50 empfangen und ausgewertet. Die Wartungseinheit 50 trägt bei der Auswertung in die Partnertabelle die Netzknotennummer #2 der Telekommunikationsanlage 14 und die zu der Leitung 26 mit dem internen Leitungskennzeichen I1 auf der Seite der Telekommunikationsanlage 28 gehörende Leitungsanschlussnummer 2-3 ein, siehe auch Figur 3.

Zu einem Zeitpunkt t32 erzeugt die Wartungseinheit 50 eine Abbruchnachricht 138, die auch als FEAT_ABORT-Nachricht bezeichnet wird. Die Abbruchnachricht 138 ist an die Verbindungssteuerungseinheit 52 gerichtet und führt dort zu einem Zeitpunkt t34 zu einer Abbruchnachricht 140, die gemäß Protokoll QSIG die mit Hilfe der Pseudo-Verbindungsaufbaunachricht 128 und der Pseudo-Verbindungsnachricht 134 angeforderten Systemressourcen freigibt. Die Abbruchnachricht 140 wird auch als RELEASE-Nachricht bezeichnet.

Figur 3 zeigt die Partnertabelle 150. Die Partnertabelle 150 hat auf die an die Telekommunikationsanlage 12 angeschlossenen Leitungen bezogene Zeilen 152, 154, 156 und 158. Weitere Zeilen 160 sind durch Punkte angedeutet. Spalten 162, 164, 166 und 168 enthalten in dieser Reihenfolge für jede angeschlossene Leitung das interne Leitungskennzeichen in der Telekommunikationsanlage 12, das Rufkennzeichen der Telekommunikationsanlage, zu dem die Leitung führt, die Netzknotennummer der benachbarten Telekommunikationsanlage und die Leitungsanschlussnummer der betreffenden Leitung in der benachbarten Telekommunikationsanlage. Weitere Spalten 170 sind durch Punkte angedeutet. Bei dem oben an Hand der Figur 2 erläuterten Verfahren wurde die Zeile 152 für die Leitung 26 mit den folgenden Werten belegt:
- internes Leitungskennzeichen I1,
- Rufkennzeichen der benachbarten Telekommunikationsanlage 14: 902,
- Netzknotennummer der benachbarten Telekommunikationsanlage 14: #2, und
- Leitungsanschlusskennzeichen in der benachbarten Telekommunikationsanlage 14: 2-3.
   Wird das an Hand der Figur 2 erläuterte Verfahren für die Leitung 32 ausgeführt, so entstehen Einträge in den Zeilen 154 und 156. Beim Durchführen des Verfahrens für die Leitung 38 entstehen die Einträge in der Zeile 158.

Anstelle oder zusätzlich zu den internen Leitungskennzeichen I1 bis I3 werden bei einem anderen Ausführungsbeispiel die für die Telekommunikationsanlage 12 vergebenen Leitungsanschlussnummern der durch die internen Leitungskennzeichen I1 bis I3 bezeichneten Leitungen vermerkt. Für die Leitung 26 mit dem Leitungskennzeichen I1 wird beispielsweise die Leitungsanschlussnummer 1-1 vermerkt.

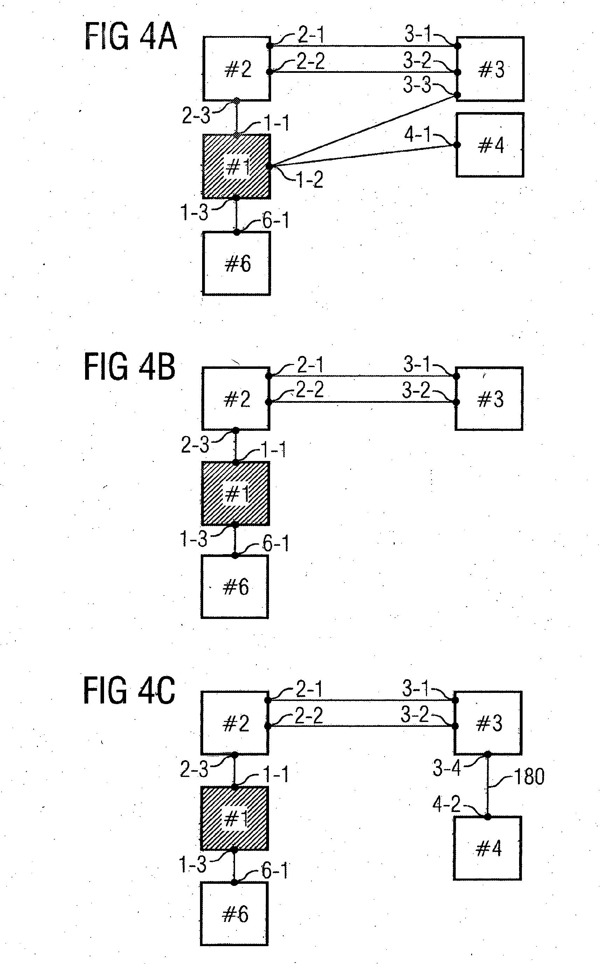

Die Figuren 4A bis 4C zeigen für den Telekommunikationsanlagenverbund 10 ermittelte Netztopologien im Fall der Figur 4A vor einer Störung, im Fall der Figur 4B während einer Störung und im Fall der Figur 4C nach der Ausführung einer Übergangsmaßnahme bis zur endgültigen Beseitigung der Störung.

Das an Hand der Figur 2 erläuterte Verfahren wird nicht nur für die Bezugs-Telekommunikationsanlage 12 sondern auch für die anderen Telekommunikationsanlagen 14 bis 20 des Telekommunikationsanlagenverbundes 10 durchgeführt. Die dabei erzeugten Partnertabellen 150 werden zu einer zentralen Rechnereinheit übermittelt und dort zum grafischen Anzeigen der Netztopologie ausgewertet. Das Ergebnis ist in Figur 4A dargestellt. Die Telekommunikationsanlagen sind durch ihre Netzknotennummern #1 bis #6 bezeichnet. Die Leitungsanschlüsse sind durch die Leitungsanschlussnummern 1-1 bis 6-1 bezeichnet. Die Multiplexeinheit 22 und der transparente Übertragungsabschnitt 24 sind nicht dargestellt, weil in ihnen das erfindungsgemäße Verfahren nicht ausgeführt wird.

Das erfindungsgemäße Verfahren wird jeweils bei der Inbetriebnahme einer Telekommunikationsanlage 12 bis 20 ausgeführt, so dass alle Telekommunikationsanlagen 12 bis 20 beim Erfassen der Netztopologie berücksichtigt werden. Außerdem wird das erfindungsgemäße Verfahren in regelmäßigen Abständen in den einzelnen Telekommunikationsanlagen 12 bis 20 ausgeführt, wobei sowohl eine synchrone Ausführung als auch eine asynchrone Ausführung möglich ist. Durch die wiederholte, z.B. periodische, Ausführung, d.h. ein sogenanntes Polling, wird erreicht, dass auch Störungen oder die Außerbetriebnahme einer Telekommunikationsanlage automatisch erfasst werden.

Für die Einträge in der Partnertabelle 130, siehe Figur 3, wird wiederholt ein Teilverfahren ausgeführt, das mit dem ab dem Zeitpunkt t14 ausgeführten Verfahren übereinstimmt. Für in der Partnertabelle enthaltenen Einträge, zu denen die interne Leitungsanschlussnummer und das Verbindungskennzeichen bereits eingetragen worden sind, wird kein Vermerk mehr in der Bitstelle 70 bzw. in einer der Bitstelle 70 entsprechenden Bitstelle gesetzt. Für das Teilverfahren sind, wie oben erwähnt, keine von Signalisierungsnachrichten für den Aufbau von Nutzdatenübertragungsverbindungen und erst recht keine Nutzdaten zu übertragen. Durch wiederholtes Ausführen des Teilverfahrens ist es möglich, Einträge in der Partnertabelle 150 zu löschen, wenn z.B. eine Partner-Telekommunikationsanlage ausfällt. Vorteilhaft ist es, das Ausbleiben mehrerer Verbindungsnachrichten 134 abzuwarten.

Im Ausführungsbeispiel sei angenommen, dass die Multiplexeinheit 22 ausfällt. Nach der Durchführung des im vorigen Abschnitt erläuterten Verfahrens in allen Telekommunikationsanlagen 12 bis 20 und der Übermittlung der aktualisierten Partnertabellen 150 an die zentrale Rechnereinheit erzeugt die zentrale Rechnereinheit die in Figur 4B gezeigte Darstellung für die Netztopologie, z.B. auf einer Anzeigeeinheit. Die beiden direkt von der Telekommunikationsanlage 12 mit der Netzknotennummer #1 zur Telekommunikationsanlage 16 mit der Netzknotennummer #3 bzw. zur Telekommunikationsanlage 18 mit der Netzknotennummer #4 führenden Übertragungsstrecken 34 und 36 sind nicht mehr dargestellt. Aufgrund der Veränderung der Netztopologie wird vom zentralen Rechner automatisch eine Fehlermeldung erzeugt, die auf eine Störung hinweist. Zur Beseitigung der Störung wird für eine Übergangszeit eine neue Verbindung zwischen der Telekommunikationsanlage 16 mit der Netzknotennummer #3 und der Telekommunikationsanlage 18 mit der Netzknotennummer #4 geschaltet.

Wird das erfindungsgemäße Verfahren nach dem Schalten der zusätzlichen Übertragungsstrecke erneut in allen Telekommunikationsanlagen 12 bis 20 ausgeführt, so ergibt sich nach der Auswertung der aktualisierten Partnertabellen in der zentralen Rechnereinheit die in Figur 4C gezeigte Netztopologie. Eine Übertragungsstrecke 180 liegt nun direkt zwischen den Telekommunikationsanlagen 16 und 18 bzw. den Telekommunikationsanlagen mit den Netzknotennummern #3 und #4. Als Leitungsanschlussnummer wurden der Übertragungsstrecke 180 auf der Seite der Telekommunikationsanlage 16 die Leitungsanschlussnummer 3-4 und auf der Seite der Telekommunikationsanlage 18 die Leitungsanschlussnummer 4-2 zugeordnet.

Figur 5 zeigt den Aufbau der Bezugs-Telekommunikationsanlage 12 hinsichtlich der an der Durchführung des erfindungsgemäßen Verfahrens beteiligten Einheiten. Die Telekommunikationsanlage 12 enthält eine Sendeeinheit 200, eine Empfangseinheit 202 und eine Steuereinheit 204.

Die Sendeeinheit 200 dient zum Senden der in der Telekommunikationsanlage 12 erzeugten Signalisierungsnachrichten über die Leitung 26 und die anderen an die Telekommunikationsanlage 12 angeschlossenen Leitungen, z.B. die Leitung 32.

Die Empfangseinheit 202 dient zum Empfang der für die Telekommunikationsanlage 12 bestimmten Signalisierungsnachrichten auf den an die Telekommunikationsanlage 12 angeschlossenen Leitungen 26, 32 und 38. Die eintreffenden Signalisierungsnachrichten werden von der Empfangseinheit 202 an die Steuereinheit 204 weitergeleitet, siehe Pfeil 206.

Die Steuereinheit 204 wertet die empfangenen Signalisierungsnachrichten gemäß Protokoll QSIG aus und steuert die Sendeeinheit 200 so an, dass protokollgemäße Antwortnachrichten erzeugt werden, siehe Pfeil 208. Die Steuereinheit 204 enthält die Wartungseinheit 50 und die Verbindungssteuerungseinheit 52. Die Steuereinheit 204 speichert die Partnertabelle 150 in einer Speichereinheit 210 ab, siehe Pfeil 212.

Die Funktionen der Sendeeinheit 200, der Empfangseinheit 202 und der Steuereinheit 204 werden im Ausführungsbeispiel mit Hilfe von Schaltungen erbracht, die keine Programme ausführen. Bei einem anderen Ausführungsbeispiel werden die Funktionen der Sendeeinheit 200, der Empfangseinheit 202 bzw. der Steuereinheit 204 mit Schaltungseinheiten erbracht, die Programme mit Hilfe eines Prozessors P1 ausführen.

Das an Hand der Figur 2 erläuterte Verfahren lässt sich unabhängig davon ausführen, ob die Partner-Telekommunikationsanlage 28 eine Transit-Telekommunikationsanlage oder eine End-Telekommunikationsanlage ist, d.h. eine Telekommunikationsanlage, an der der gerufene Teilnehmer angeschlossen ist. Die Bezugs-Telekommunikationsanlage kann eine Transit-Telekommunikationsanlage oder eine Anfangs-Telekommunikationsanlage sein, d.h. eine Telekommunikationsanlage, an der der rufende Teilnehmer angeschlossen ist. Außerdem ist es nicht erforderlich, dass die Verbindungsnachricht 112 aufgrund der Verbindungsaufbaunachricht 102 erzeugt wird. Wichtig ist nur, dass die Verbindungsnachricht 102 auf einer Leitung 26 übertragen wird, für die die Bitstelle 104 bzw. eine der Bitstelle 104 entsprechende Bitstelle den Wert EINS hat.

## Patentansprüche

1. Verfahren zum Übermitteln eines Kennzeichendatums (NAC2, #2) einer Netzknoteneinheit (14),
bei dem eine Übertragungsstrecke (26) zwischen einer Bezugs-Netzknoteneinheit (12) und einer Partner-Netzknoteneinheit (14) eines Datenübertragungsnetzes (10) liegt,
bei dem über die Übertragungsstrecke (26) von der Bezugs-Netzknoteneinheit (12) zu der Partner-Netzknoteneinheit (14) mindestens eine Signalisierungsnachricht (102) übertragen wird, die zur Verbindungssteuerung für die Übertragung von Nutzdaten zwischen zwei Endgeräten (TlnA, TlnB) des Datenübertragungsnetzes (10) dient,
bei dem in die Signalisierungsnachricht (102) automatisch ein Nachrichtenelement eingefügt wird, mit dem die Übertragung eines Kennzeichendatums (NAC2) angefordert wird, das die Partner-Netzknoteneinheit (14) oder einen Bestandteil der Partner-Netzknoteneinheit (14) kennzeichnet,
und bei dem das Kennzeichendatum von der Partner-Netzknoteneinheit (14) zu der Bezugs-Netzknoteneinheit (12) mit einer Rück-Signalisierungsnachricht (112) übertragen wird,
**dadurch gekennzeichnet, dass** das Kennzeichendatum ein Verbindungskennzeichen (NAC2) ist, mit dessen Hilfe automatisch von der Bezugs-Netzknoteneinheit (12) an die Partner-Netzknoteneinheit (14) eine Anforderung (128) zur Übertragung mindestens eines weiteren Kennzeichendatums (#2) gestellt wird, das die Partner-Netzknoteneinheit (14) oder einen Bestandteil der Partner-Netzknoteneinheit (14) kennzeichnet,
und dass das weitere Kennzeichendatum (#2) von der Partner-Netzknoteneinheit (14) zur Bezugs-Netzknoteneinheit (12) übertragen wird.

2. Verfahren nach Anspruch 1, **dadurch**
**gekennzeichnet, dass** das Kennzeichendatum (NAC2) und/oder das weitere Kennzeichendatum (#2) für das Erfassen der Topologie und/oder zum Festlegen von Weiterleitungstabellen verwendet werden.

3. Verfahren nach Anspruch 1 oder 2, **dadurch gekennzeichnet, dass** das Verfahren in mehreren Netzknoteneinheiten (12 bis 20) ausgeführt wird,
und/oder dass die Kennzeichendaten (NAC) und/oder die weiteren Kennzeichendaten (#1 bis #6) zentral gesammelt werden.

4. Verfahren nach einem der vorhergehenden Ansprüche,
**dadurch gekennzeichnet, dass** das Datenübertragungsnetz (10) ein durchschaltevermitteltes Datenübertragungsnetz (10) ist, in dem abhängig von den Signalisierungsdaten Übertragungsstrecken und/oder Übertragungskanäle von Übertragungsstrecken verschaltet werden,
und/oder dass die Übertragungsstrecke (26) eine Leitung oder eine Funkübertragungsstrecke ist,
und/oder dass die Netzknoteneinheit (12 bis 20) abhängig von der Signalisierungsnachricht (102) Vermittlungsfunktionen erbringt und/oder dass die Netzknoteneinheit eine Nebenstellenanlage (12 bis 20) eines Nebenstellenanlagenverbundes (10) ist,
und/oder dass die Nutzdaten Gesprächsdaten oder andere Anwenderdaten sind.

5. Verfahren nach einem der vorhergehenden Ansprüche,
**dadurch gekennzeichnet, dass** die Signalisierungsnachricht (102) eine Verbindungsaufbaunachricht ist und/oder dass die Rück-Signalisierungsnacliricht (112) einen Verbindungsaufbau bestätigt,
und/oder dass die Signalisierungsnachricht (102) und/oder die Rück-Signalisierungsnachricht (112) gemäß dem Protokoll ISUP oder dem Protokoll QSIG oder gemäß einem auf einem dieser Protokolle aufbauenden Protokoll übermittelt wird.

6. Verfahren nach einem der vorhergehenden Ansprüche,
**dadurch gekennzeichnet, dass** das weitere Kennzeichendatum (#2) ohne Aufbau einer zusätzlichen Nutzdatenverbindung angefordert und übermittelt wird (128).

7. Verfahren nach einem der vorhergehenden Ansprüche,
**dadurch gekennzeichnet, dass** ein weiteres Kennzeichendatum (3-2) zur Kennzeichnung des Anschlusses der Übertragungsstrecke (26) in der Partner-Netzknoteneinheit (14) angefordert und übertragen wird,
wobei vorzugsweise das weitere Kennzeichendatum (3-2) zur Kennzeichnung des Anschlusses, für die Wartung des Datenübertragungsnetzes (10) festgelegt worden ist.

8. Verfahren nach einem der Ansprüche 1 bis 6, **dadurch gekennzeichnet, dass** ein weiteres Kennzeichendatum (#2) zur Kennzeichnung der Partner-Netzknoteneinheit (14) angefordert und übertragen wird,
wobei vorzugsweise das weitere Kennzeichendatum (#2) zur Kennzeichnung der Partner-Netzknoteneinheit für die Wartung des Datenübertragungsnetzes (10) festgelegt worden ist.

9. Verfahren nach einem der vorhergehenden Ansprüche,
**dadurch gekennzeichnet, dass** eine Erfassungszeitdauer (120) vorgegeben wird,
dass während der Erfassungszeitdauer (120) das Verfahren abhängig von den während der Erfassungszeitdauer (120) auftretenden Signalisierungsnachrichten (102, 112) für mehrere Übertragungsstrecken (26 bis 32) der Bezugs-Netzknoteneinheit (12) und/oder mehrmals pro Übertragungsstrecke (32) ausgeführt wird,
und/oder dass die für die Erfassungszeitdauer (120) empfangenen Kennzeichendaten (NAC) vorzugsweise mit ihrer Zuordnung zu einer Übertragungsstrecke (26, 32) gespeichert werden,
und/oder dass nach Ablauf der Erfassungszeitdauer (120) die weiteren Kennzeichendaten (#2) mit Hilfe der gespeicherten Kennzeichendaten (NAC) angefordert werden (128).

10. Verfahren nach Anspruch 9, **dadurch gekennzeichnet, dass** vor Beginn der Erfassungszeitdauer (120) ein Vermerk (70) vorzugsweise in einem der Übertragungsstrecke (26) zugeordneten Datensatz (60) gespeichert wird,
dass abhängig vom Vermerk (70) das Nachrichtenelement in die Signalisierungsnachricht (102) eingefügt wird,
dass beim Fehlen des Vermerks (70) das Nachrichtenelement nicht in die Signalisierungsnachricht (102) eingefügt wird,
und/oder dass die Rück-Signalisierungsnachricht (112) den Beginn der Erfassungszeitdauer (120) festlegt,
und dass der Vermerk (70) erst am Ende der Erfassungszeitdauer (120) entfernt wird.

11. Verfahren nach Anspruch 9 oder 10, **dadurch gekennzeichnet, dass** in der Partner-Netzknoteneinheit (14) ein Vermerk (104) vorzugsweise in einem der Übertragungsstrecke (26) zugeordneten Datensatz (26) gespeichert wird, wenn das Nachrichtenelement einfangen wird,
dass abhängig von dem Vermerk (104) das Kennzeichendatum (NAC) in eine Rück-Signalisierungsnachricht (112) eingefügt wird,
dass beim Fehlen des Vermerks (104) in Rück-Signalisierungsnachrichten (112) kein Kennzeichendatum eingefügt wird,
und dass der Vermerk (104) beim Übertragen einer Rück-Signalisierungsnachricht (112) mit einem Kennzeichendatum (NAC) entfernt wird.

12. Verfahren nach einem der vorhergehenden Ansprüche, **dadurch gekennzeichnet, dass** für mindestens eine an der Bezugs-Netzknoteneinheit (12) angeschlossene Übertragungsstrecke (26) vermerkt wird, dass ein Verfahren nach einem der vorhergehenden Ansprüche ausgeführt werden soll,
und/oder dass für mindestens eine an der Bezugs-Netzknoteneinheit (12) angeschlossene Übertragungsstrecke (26) vermerkt wird, dass ein Kennzeichendatum nur manuell vorgegeben wird,
und/oder dass für mindestens eine an der Bezugs-Netzknoteneinheit (12) angeschlossene Übertragungsstrecke (26) vermerkt wird, dass ein Wechsel von einer manuellen Vorgabe zu einem automatischen Erfassen eines Kennzeichendatums zulässig ist.

13. Verfahren nach einem der vorhergehenden Ansprüche,
**dadurch gekennzeichnet, dass** zwischen der Bezugs-Netzknoteneinheit (12) und der Partner-Netzknoteneinheit (14) keine weitere Netzknoteneinheit liegt, in welcher zumindest die auf die Partner-Netzknoteneinheit (14) bezogenen Verfahrensschritte eines Verfahrens nach einem der Ansprüche 1 bis 13 ausgeführt werden.

14. Verfahren nach einem der vorhergehenden Ansprüche,
**dadurch gekennzeichnet, dass** zwischen der Bezugs-Netzknoteneinheit (12) und der Partner-Netzknoteneinheit (14) eine Multiplexeinheit (22) liegt, die vorzugsweise im Rahmen eines Zeitmultiplexverfahrens eine Multiplexfunktion und/oder eine Demultiplexfunktion für die Übertragungsstrecke (32) und mindestens zwei weitere an die Multiplexeinheit (22) angeschlossene Übertragungsstrecken (34, 36) erbringt.

15. Verfahren nach einem der vorhergehenden Ansprüche,
**dadurch gekennzeichnet, dass** die Übertragungsstrecke (38) zu einem weiteren Datenübertragungsnetz (24) führt, für das ein anderes Signalisierungsverfahren zur Verbindungssteuerung festgelegt worden ist,
und dass die Signalisierungsnachrichten des Datenübertragungsnetzes in ihrer Struktur und in ihrem Wert unverändert über das weitere Datenübertragungsnetz (24) übertragen werden,
und/oder dass das weitere Datenübert.ragungsnetz die Funktion eines virtuellen Privatnetzes erbringt.

16. Verfahren nach einem der vorhergehenden Ansprüche,
**dadurch gekennzeichnet, dass** das Verfahren wiederholt, vorzugsweise periodisch, für eine Übertragungsstrecke ausgeführt wird, über die noch keine Rück-Signalisierungsnachricht empfangen worden ist,
und/oder dass für eine Übertragungsstrecke, für die eine Rück-Signalisierungsnachricht empfangen worden ist, wiederholt, vorzugsweise periodisch, geprüft wird, ob die Partner-Netzknoteneinheit weiterhin über die
Übertragungsstrecke erreichbar ist.

17. Vorrichtung (12), insbesondere vermittlungstechnische Einrichtung,
mit mindestens einer Anschlusseinheit (1-1) für den Anschluss einer Übertragungsstrecke (26), die zu einer Partner-Netzknoteneinheit (12) führt,
mit einer Sendeeinheit (200), die über die Übertragungsstrecke (26) mindestens eine Signalisierungsnachricht (102) sendet, die zur Verbindungssteuerung für die Übertragung von Nutzdaten zwischen zwei Endgeräten (TlnA, TlnB) eines Datenübertragungsnetzes (10) dient,
mit einer Empfangseinheit (202), die über die Übertragungsstrecke (26) eine Rück-Signalisierungsnachricht (112) empfängt, die ebenfalls zur Verbindungssteuerung für die Übertragung von Nutzdaten dient,
und mit einer Steuereinheit (204) zum Ansteuern der Sendeeinheit (200) und der Empfangseinheit (202),
**wobei** die Steuereinheit (204) eine Kennzeichendatenerfassungseinheit (50) enthält, die in die Signalisierungsnachricht (102) automatisch ein Nachrichtenelement einfügt, mit dem die Übertragung eines Kennzeichendatums (NAC) angefordert wird, das die Partner-Netzknoteneinheit (14) oder einen Bestandteil der Partner-Netzknoteneinheit (14) **kennzeichnet,**
**dadurch gekennzeichnet**, dass die Kennzeichendatenerfassungseinheit (50) nach dem Empfang des Kennzeichendatums (NAC) in der Rück-Signalisierungsnachricht (112) mit Hilfe des Kennzeichendatums (NAC) von der Partner-Netzknoteneinheit (14) mindestens ein weiteres Kennzeichendatum (#2) zur Kennzeichnung der Partner-Netzknoteneinheit (14) oder eines Bestandteils der Partner-Netzknoteneinheit (14) anfordert und von der Empfangseinheit (202) entgegennimmt.

18. Vorrichtung (12) nach Anspruch 17, **dadurch gekennzeichnet, dass** die Vorrichtung weitere Einheiten enthält, die zur Ausführung mindestens eines der auf die Bezugs-Netzknoteneinheit (12) bezogenen Verfahrensschritte nach einem der Ansprüche 1 bis 16 ausgelegt und eingerichtet sind.

19. Programm mit einer Befehlsfolge **dadurch gekennzeichnet, dass** bei der Ausführung der Befehlsfolge durch einen Prozessor (P1) ein Verfahren nach einem der Ansprüche 1 bis 16 ausgeführt wird.

## Claims

1. Method for transmitting an identification (NAC2, #2) of a network node unit (14),
in which a transmission path (26) lies between a reference network node unit (12) and a partner network node unit (14) of a data transmission network (10),
in which, via the transmission path (26), at least one signaling message (102) is transmitted from the reference network node unit (12) to the partner network node unit (14), signaling message which is used for the connection control for the transmission of useful data between two terminals (TlnA, TlnB) of the data transmission network (10),
in which a message element is automatically inserted into the signaling message (102), message element by means of which the transmission of an identification (NAC2) is requested, identification which identifies the partner network node unit (14) or a component of the partner network node unit (14),
and in which the identification is transmitted from the partner network node unit (14) to the reference network node unit (12) by means of a back signaling message (112),
**characterized in that** the identification is a connection identification (NAC2), by means of which a request (128) for the transmission of at least one additional identification (#2) is made automatically from the reference network node unit (12) to the partner network node unit (14), additional identification which identifies the partner network node unit (14) or a component of the partner network node unit (14),
and **in that** the additional identification (#2) is transmitted from the partner network node unit (14) to the reference network node unit (12).

2. Method according to Claim 1, **characterized in that** the identification (NAC2) and/or the additional identification (#2) is/are used for the acquisition of the topology and/or for the establishment of forwarding tables.

3. Method according to Claim 1 or 2, **characterized in that** the method is implemented in several network node units (12 to 20),
and/or **in that** the identification (NAC) and/or the additional identifications (#1 to #6) are collected centrally.

4. Method according to any one of the preceding claims, **characterized in that** the data transmission network (10) is a circuit switched data transmission network (10) in which, depending on the signaling data, transmission paths and/or transmission channels of transmission paths are interconnected,
and/or **in that** the transmission path (26) is a line or a wireless transmission path,
and/or **in that** the network node unit (12 to 20), depending on the signaling message (102), provides switchboard functions and/or **in that** the network node unit is a subsidiary device (12 to 20) of a subsidiary device association (10),
and/or the useful data are voice data or other user data.

5. Method according to any one of the preceding claims, **characterized in that** the signaling message (102) is a connection setup message and/or **in that** the back signaling message (112) confirms a connection setup,
and/or **in that** the signaling message (102) and/or the back signaling message (112) is transmitted according to the protocol ISUP or the protocol QSIG or according to a protocol built on one of these protocols.

6. Method according to any one of the preceding claims, **characterized in that** the additional identification (#2) is requested and transmitted without the setup of an additional useful data connection (128).

7. Method according to any one of the preceding claims, **characterized in that** an additional identification (3-2) for identifying the connection of the transmission path (26) in the partner network node unit (14) is requested and transmitted,
wherein preferably the additional identification (3-2) for identifying the connection has been established for the maintenance of the data transmission network (10).

8. Method according to any one of Claims 1 to 6, **characterized in that** an additional identification (#2) for identifying the partner network node unit (14) is requested and transmitted,
wherein preferably the additional identification (#2) for identifying the partner network node unit has been established for the maintenance of the data transmission network (10).

9. Method according to any one of the preceding claims, **characterized in that** an acquisition duration (120) is predetermined,
**in that**, during the acquisition duration (120), depending on the signaling messages (102, 112) occurring during the acquisition duration (120), the method is implemented for several transmission paths (26 to 32) of the reference network node unit (12) and/or several times per transmission path (32),
and/or **in that** the identifications (NAC) received for the acquisition duration (120) are preferably stored with their assignment to a transmission path (26, 32),
and/or **in that** after the expiration of the acquisition duration (120), the additional identifications (#2) are requested (128) by means of the stored identifications (NAC).

10. Method according to Claim 9, **characterized in that**, before the start of the acquisition duration (120), a note (70) is stored preferably in a data set (60) associated with the transmission path (26),
**in that**, depending on the note (70), the message element is inserted into the signaling message (102),
**in that**, in the case of the absence of the note (70), the message element is not inserted into the signaling message (102),
and/or **in that** the back signaling message (112) establishes the beginning of the acquisition duration (120),
and **in that** the note (70) is removed only at the end of the acquisition duration (120).

11. Method according to Claim 9 or 10, **characterized in that**, in the partner network node unit (14), a note (104) is preferably stored in a data set (26) associated with the transmission path (26), when the message element is received,
**in that**, depending on the note (104), the identification (NAC) is inserted into a back signaling message (112),
**in that**, in the case of the absence of a note (104), no identification is inserted into the back signaling messages (112),
and **in that** the note (104) is removed at the time of the transmission of a back signaling message (112) with an identification (NAC).

12. Method according to any one of the preceding claims, **characterized in that**, for at least one transmission path (26) connected to the reference network node unit (12), a note is made indicating that a method according to one of the preceding claims should be implemented,
and/or **in that**, for at least one transmission path (26) connected to the reference network node unit (12), a note is provided indicating that an identification is specified only manually,
and/or **in that**, for at least one transmission path (26) connected to the reference network node unit (12), a note is provided indicating that a switch from a manual specification to an automatic acquisition of an identification is permissible.

13. Method according to any one of the preceding claims, **characterized in that**, between the reference network node unit (12) and the partner network node unit (14), no additional network node unit is located, in which at least the process steps of a method according to one of Claims 1 to 13, which relate to the partner network node unit (14), are implemented.

14. Method according to any one of the preceding claims, **characterized in that**, between the reference network node unit (12) and the partner network node unit (14), a multiplexing unit (22) is located, which preferably provides, in the context of a time multiplexing process, a multiplexing function and/or demultiplexing function for the transmission path (32) and at least two additional transmission paths (34, 36) connected to the multiplexing unit (22).

15. Method according to any one of the preceding claims, **characterized in that** the transmission path (38) leads to an additional data transmission network (24), for which another signaling process for connection control has been established,
and **in that** the signaling messages of the data transmission network are transmitted unchanged in their structure and in their value via the additional data transmission network (24),
and/or **in that** the additional data transmission network provides the function of a virtual private network.

16. Method according to any one of the preceding claims, **characterized in that** the method is implemented, preferably periodically, for a transmission path on which no back signaling message has yet been received,
and/or **in that**, for a transmission path for which a back signaling message has been received, a verification is carried out repeatedly, preferably periodically, to determine whether the partner network node unit continues to be accessible via the transmission path.

17. Device (12), in particular switchboard technical installation,
with at least one connection unit (1-1) for the connection of a transmission path (26) which leads to a partner network node unit (12),
with a transmission unit (200), which sends, via the transmission path (26), at least one signaling message (102) which is used for the connection control for the transmission of useful data between two terminals (TlnA, TlnB) of a data transmission network (10),
with a receiving unit (202) which receives, via the transmission path (26), a back signaling message (112), which is also used for the connection control for the transmission of useful data,
and with a control unit (204) for controlling the transmission unit (200) and the receiving unit (202),
wherein the control unit (204) contains an identification acquisition unit (50) which automatically inserts, into the signaling message (102), a message element by means of which the transmission of an identification (NAC) is requested, which identifies the partner network node unit (14) or a component of the partner network node unit (14),
**characterized in that** the identification acquisition unit (50), after the reception of the identification (NAC) in the back signaling message (112), requests and accepts, from the receiving unit (202), by means of the identification (NAC) from the partner network node unit (14), at least one additional identification (#2) for identifying the partner network node unit (14) or a component of the partner network node unit (14).

18. Device (12) according to Claim 17, **characterized in that** the device contains additional units, which are designed and set up for implementation of at least one of the process steps according to one of Claims 1 to 16, which relate to the reference network node unit (12).

19. Program with a command sequence **characterized in that**, at the time of the execution of the command sequence by a processor (P1), a method according to one of Claims 1 to 16 is implemented.

## Revendications

1. Procédé pour transmettre une donnée d'identification (NAC2, #2) d'une unité de noeud de réseau (14),
dans lequel une voie de transmission (26) se trouve entre une unité de noeud de réseau de référence (12) et une unité de noeud de réseau de partenaire (14) d'un réseau de transmission de données (10),
dans lequel au moins un message de signalisation (102) est transmis par la voie de transmission (26) de l'unité de noeud de réseau de référence (12) à l'unité de noeud de réseau de partenaire (14), lequel message sert à la commande de liaison pour la transmission de données utiles entre deux terminaux (TlnA, TlnB) du réseau de transmission de données (10),
dans lequel un élément de message est automatiquement inséré dans le message de signalisation (102), avec lequel la transmission d'une donnée d'identification (NAC2) est demandée, laquelle identifie l'unité de noeud de réseau de partenaire (14) ou un élément de l'unité de noeud de réseau de partenaire (14),
et dans lequel la donnée d'identification est transmise de l'unité de noeud de réseau de partenaire (14) à l'unité de noeud de réseau de référence (12) avec un message de signalisation de retour (112),
**caractérisé en ce que** la donnée d'identification est une identification de liaison (NAC2), à l'aide de laquelle une demande (128) pour la transmission au moins d'une autre donnée d'identification (#2) est placée automatiquement par l'unité de noeud de réseau de référence (12) à l'unité de noeud de réseau de partenaire (14), laquelle identifie l'unité de noeud de réseau de partenaire (14) ou un élément de l'unité de noeud de réseau de partenaire (14),
et **en ce que** l'autre donnée d'identification (#2) est transmise de l'unité de noeud de réseau de partenaire (14) à l'unité de noeud de réseau de référence (12).

2. Procédé selon la revendication 1, **caractérisé en ce que** la donnée d'identification (NAC2) et/ou l'autre donnée d'identification (#2) sont utilisées pour la détection de la topologie et/ou pour la détermination de tableaux de transmission.

3. Procédé selon la revendication 1 ou 2, **caractérisé en ce que** le procédé est réalisé dans plusieurs unités de noeud de réseau (12 à 20),
et/ou **en ce que** les données d'identification (NAC) et/ou les autres données d'identification (#1 à #6) sont collectées de manière centrale.

4. Procédé selon l'une quelconque des revendications précédentes, **caractérisé en ce que** le réseau de transmission de données (10) est un réseau de transmission de données (10) à commutation de circuit, dans lequel des voies de transmission et/ou des canaux de transmission de voies de transmission sont connectés en fonction des données de signalisation,
et/ou **en ce que** la voie de transmission (26) est une ligne ou une voie de radiotransmission,
et/ou **en ce que** l'unité de noeud de réseau (12 à 20) fournit en fonction du message de signalisation (102) des fonctions de commutation et/ou **en ce que** l'unité de noeud de réseau est un poste supplémentaire (12 à 20) d'un ensemble de postes supplémentaires (10),
et/ou **en ce que** les données utiles sont des données de conversation ou d'autres données utilisateurs.

5. Procédé selon l'une quelconque des revendications précédentes, **caractérisé en ce que** le message de signalisation (102) est un message d'établissement de liaison et/ou **en ce que** le message de signalisation de retour (112) confirme un établissement de liaison,
et/ou **en ce que** le message de signalisation (102) et/ou le message de signalisation de retour (112) est transmis selon le protocole ISUP ou le protocole QSIG ou selon un protocole se basant sur l'un de ces protocoles.

6. Procédé selon l'une quelconque des revendications précédentes, **caractérisé en ce que** l'autre donnée d'identification (#2) est demandée et transmise sans établissement d'une liaison de données utiles supplémentaire (128).

7. Procédé selon l'une quelconque des revendications précédentes, **caractérisé en ce qu'**une autre donnée d'identification (3-2) est demandée et transmise pour l'identification du raccordement de la voie de transmission (26) dans l'unité de noeud de réseau de partenaire (14),
l'autre donnée d'identification (3-2) ayant été déterminée de préférence pour l'identification du raccord pour la maintenance du réseau de transmission de données (10).

8. Procédé selon l'une quelconque des revendications 1 à 6, **caractérisé en ce qu'**une autre donnée d'identification (#2) est demandée et transmise pour l'identification de l'unité de noeud de réseau de partenaire (14),
l'autre donnée d'identification (#2) ayant été déterminée de préférence pour l'identification de l'unité de noeud de réseau de partenaire pour la maintenance du réseau de transmission de données (10).

9. Procédé selon l'une quelconque des revendications précédentes, **caractérisé en ce qu'**une période de détection (120) est prescrite,
**en ce que** pendant la période de détection (120), le procédé est réalisé en fonction des messages de signalisation (102, 112) survenant pendant la période de détection (120) pour plusieurs voies de transmission (26 à 32) de l'unité de noeud de réseau de référence (12) et/ou plusieurs fois par voie de transmission (32),
et/ou **en ce que** les données d'identification (NAC) reçues pour la période de détection (120) sont de préférence enregistrées avec leur association à une voie de transmission (26, 32),
et/ou **en ce que** les autres données d'identification (#2) sont demandées à l'aide des données d'identification (NAC) enregistrées après expiration de la période de détection (120).

10. Procédé selon la revendication 9, **caractérisé en ce qu'**une note (70) est de préférence enregistrée dans un jeu de données (60) associé à la voie de transmission (26) avant le début de la période de détection (120),
**en ce qu'**en fonction de la note (70), l'élément de message est inséré dans le message de signalisation (102), **en ce qu'**en cas de manque de la note (70), l'élément de message n'est pas inséré dans le message de signalisation (102),
et/ou **en ce que** le message de signalisation de retour (112) détermine le début de la période de détection (120), et **en ce que** la note (70) n'est retirée qu'à la fin de la période de détection (120).

11. Procédé selon la revendication 9 ou 10, **caractérisé en ce qu'**une note (104) est de préférence enregistrée dans l'unité de noeud de réseau de partenaire (14) dans un jeu de données (26) associé à la voie de transmission (26) si l'élément de message est reçu,
**en ce que** la donnée d'identification (NAC) est insérée dans un message de signalisation de retour (112) en fonction de la note (104),
**en ce qu'**aucune donnée d'identification n'est insérée en cas de manque de la note (104) dans des messages de signalisation de retour (112),
et **en ce que** la note (104) est retirée lors de la transmission d'un message de signalisation de retour (112) avec une donnée d'identification (NAC).

12. Procédé selon l'une quelconque des revendications précédentes, **caractérisé en ce qu'**il est noté pour au moins une voie de transmission (26) raccordée à l'unité de noeud de réseau de référence (12) qu'un procédé selon l'une quelconque des revendications précédentes doit être réalisé,
et/ou **en ce qu'**il est noté pour au moins une voie de transmission (26) raccordée à l'unité de noeud de réseau de référence (12) qu'une donnée d'identification n'est prescrite que manuellement,
et/ou **en ce qu'**il est noté pour au moins une voie de transmission (26) raccordée à l'unité de noeud de réseau de référence (12) qu'un changement d'une prescription manuelle à une détection automatique d'une donnée d'identification est autorisé.

13. Procédé selon l'une quelconque des revendications précédentes, **caractérisé en ce qu'**aucune autre unité de noeud de réseau ne se trouve entre l'unité de noeud de réseau de référence (12) et l'unité de noeud de réseau de partenaire (14), dans laquelle au moins les étapes d'un procédé relatives à l'unité de noeud de réseau de partenaire (14) sont réalisées selon l'une quelconque des revendications 1 à 13.

14. Procédé selon l'une quelconque des revendications précédentes, **caractérisé en ce qu'**une unité de multiplexage (22) se trouve entre l'unité de noeud de réseau de référence (12) et l'unité de noeud de réseau de partenaire (14), laquelle fournit de préférence dans le cadre d'un procédé de multiplexage temporel une fonction de multiplexage et/ou une fonction de démultiplexage pour la voie de transmission (32) et au moins deux autres voies de transmission (34, 36) raccordées à l'unité de multiplexage (22).

15. Procédé selon l'une quelconque des revendications précédentes, **caractérisé en ce que** la voie de transmission (38) mène à un autre réseau de transmission de données (24), pour lequel un autre procédé de signalisation a été déterminé pour la commande de liaison, et **en ce que** les messages de signalisation du réseau de transmission de données sont transmis sans être modifiés dans leur structure et dans leur valeur par l'autre réseau de transmission de données (24),
et/ou **en ce que** l'autre réseau de transmission de données fournit la fonction d'un réseau privé virtuel.

16. Procédé selon l'une quelconque des revendications précédentes, **caractérisé en ce que** le procédé est réalisé de manière répétée, de préférence de manière périodique, pour une voie de transmission, par laquelle aucun message de signalisation de retour n'a encore été reçu,
et/ou **en ce que** pour une voie de transmission, pour laquelle un message de signalisation de retour a été reçu, il est vérifié de manière répétée, de préférence de manière périodique si l'unité de noeud de réseau de partenaire peut en outre être atteinte par la voie de transmission.

17. Dispositif (12), en particulier dispositif technique de commutation,
avec au moins une unité de raccordement (1-1) pour le raccordement d'une voie de transmission (26) qui mène à une unité de noeud de réseau de partenaire (12),
avec une unité d'émission (200) qui émet par la voie de transmission (26) au moins un message de signalisation (102) qui sert à la commande de liaison pour la transmission de données utiles entre deux terminaux (TlnA, TlnB) d'un réseau de transmission de données (10),
avec une unité de réception (202) qui reçoit par la voie de transmission (26) un message de signalisation de retour (112) qui sert aussi à la commande de liaison pour la transmission de données utiles,
et avec une unité de commande (204) pour la commande de l'unité d'émission (200) et de l'unité de réception (202), l'unité de commande (204) contenant une unité de détection de données d'identification (50) qui insère automatiquement un élément de message dans le message de signalisation (102), avec lequel élément de message la transmission d'une donnée d'identification (NAC) est demandée, laquelle identifie l'unité de noeud de réseau de partenaire (14) ou un élément de l'unité de noeud de réseau de partenaire (14),
**caractérisé en ce que** l'unité de détection de données d'identification (50) demande dans le message de signalisation de retour (112) à l'aide de la donnée d'identification (NAC) de l'unité de noeud de réseau de partenaire (14) au moins une autre donnée d'identification (#2) pour l'identification de l'unité de noeud de réseau de partenaire (14) ou d'un élément de l'unité de noeud de réseau de partenaire (14) et la reçoit de l'unité de réception (202).

18. Dispositif (12) selon la revendication 17, **caractérisé en ce que** le dispositif contient d'autres unités qui sont configurées et aménagées pour la réalisation au moins de l'une des étapes de procédé relatives à l'unité de noeud de réseau de référence (12) selon l'une quelconque des revendications 1 à 16.

19. Programme avec une séquence d'instructions, **caractérisé en ce qu'**un procédé selon l'une quelconque des revendications 1 à 16 est réalisé lors de la réalisation de la séquence d'instructions par un processeur (P1).
